# EUROPEAN PATENT APPLICATION

(11) **EP 4 106 051 A1**
(43) Date of publication of application: **21.12.2022**
(21) Application number: 20923992.0
(22) Date of filing: 11.03.2020
(51) Int. Cl.: H01M 4/134

(54) **ANODE POLE PIECE, BATTERY USING SAME, AND ELECTRONIC DEVICE**

(71) Applicant: Ningde Amperex Technology Limited, Ningde, Fujian 352100 (CN)
(72) Inventor: LI, Daguang, Ningde, Fujian 352100 (CN); CHEN, Maohua, Ningde, Fujian 352100 (CN)
(74) Representative: Icosa
(86) International application number: PCT/CN2020/078858
(87) International publication number: WO 2021/179220

(57) **Abstract**

This application provides an anode plate, and a battery and electronic apparatus using such electrode plate, where the anode plate includes a porous anode skeleton, a lithiophilic substance whose concentration presents gradient distribution inside the porous anode skeleton, and a current collector. This application can relieve the anode plate from volume swelling during cycling, and inhibit the growth of lithium dendrites, thereby improving the safety performance and cycling performance of lithium-ion batteries.

## Description

### TECHNICAL FIELD

This application relates to the electrochemical field, and specifically, to an anode plate, a battery and electronic apparatus using such electrode plate.

### BACKGROUND

Lithium-ion batteries feature high specific energy, high operating voltage, low self-discharge rate, small size, and light weight, and therefore are widely used in the field of consumer electronics. With the rapid development of electric vehicles and mobile electronic devices, people have increasingly high requirements for performance of lithium-ion batteries. For example, lithium-ion batteries are required to provide higher energy density, safety, and cycling performance.

To improve the performance of lithium-ion batteries, the prior art adopts an anode skeleton to provide sufficient space for lithium deposition so as to reduce volume change of the anode during charging and discharging. Specifically, when a battery is being charged, lithium metal goes off the cathode and deposits at the anode plate, and lithium can be stored in pores of the carbon skeleton, thereby maintaining a stable volume of the anode plate. When the battery is being discharged, lithium metal goes off the anode and intercalates to a cathode material, and as the carbon skeleton is able to maintain its shape, the volume of the anode plate does not decrease.

However, for existing anode plates based on an anode skeleton, lithium metal tends to deposit on the surface of the anode skeleton rather than inside the anode skeleton. This affects performance of the anode skeleton, which in turn results in great change of the volume of the anode plate during cycling, affecting performance of the anode plate. As a result, the performance of the lithium-ion battery is affected.

### SUMMARY

This application is intended to provide an anode plate, and a battery and electronic apparatus using such electrode plate, so as to control a lithium deposition direction and ensure even and controllable deposition of lithium metal. Specific technical solutions are as follows:
A first aspect of this application provides an anode plate, including a porous anode skeleton, a lithiophilic substance whose concentration presents gradient distribution inside the porous anode skeleton, and a current collector.

In an embodiment of this application, the concentration of the lithiophilic substance gradually decreases in a direction from the current collector to a surface of the porous anode skeleton.

In an embodiment of this application, the lithiophilic substance includes at least one of a metal, an oxide, or a substance containing a specified functional group.

In an embodiment of this application, the metal includes at least one of silver, aluminum, gold, barium, calcium, indium, platinum, silicon, tin, or zinc, the oxide includes at least one of titanium dioxide, silicon dioxide, or zinc oxide, and the functional group includes at least one of hydroxyl, ester, carboxyl, or amino.

In an embodiment of this application, a thickness of the lithiophilic substance is 1 nm to 10 µm.

In an embodiment of this application, a material of the porous anode skeleton includes at least one of a metal, a carbon material, or an insulating polymer.

In an embodiment of this application, the porous anode skeleton has a strength of not less than 15 GPa and a porosity of 20% to 90%.

In an embodiment of this application, a thickness of the anode plate is 10 to 100 µm.

In an embodiment of this application, lithium metal is further included.

In an embodiment of this application, an amount of the lithium metal is 0.25-25 mg/cm².

In an embodiment of this application, a material of the current collector includes at least one of copper, nickel, titanium, molybdenum, iron, zinc, carbon, or graphene.

A second aspect of this application provides a preparation method of anode plate, including:
sealing one surface of a porous anode skeleton with insulation;
depositing a lithiophilic substance on an unsealed surface of the porous anode skeleton to obtain a porous anode skeleton containing the lithiophilic substance;
cleaning the porous anode skeleton containing the lithiophilic substance and then drying it in a vacuum oven; and
placing the unsealed surface adjacent to a current collector, and applying hot pressing to bond the anode skeleton and the current collector to obtain an anode plate.

In an embodiment of this application, a current density of electroplating is 20-1000 mA/cm².

In an embodiment of this application, a deposition method includes an electroplating method, a PVD method, or an ALD method.

A third aspect of this application provides a lithium-ion battery including: a cathode electrode;
an anode plate;
a separator, where the separator is located between the cathode plate and the anode plate; and
an electrolyte;
where the anode plate is the anode plate according to the first aspect.

A fourth aspect of this application provides an electronic apparatus, which includes the lithium-ion battery according to the third aspect of this application.

The anode plate in this application includes a porous anode skeleton, a lithiophilic substance whose concentration presents gradient distribution inside the porous anode skeleton, and a current collector. Because the concentration of the lithiophilic substance presents gradient distribution inside the porous anode skeleton, lithium metal deposition is induced to accumulate gradually from the current collector side to the separator side. Therefore, lithium metal is prevented from preferentially depositing on the surface of the anode skeleton but deposits inside the anode skeleton instead. In this way, lithium deposition sites are controlled for even, controllable deposition of lithium metal, which relieves the anode plate from volume swelling during cycling. Furthermore, with lithium metal depositing inside the anode skeleton, the growth of lithium dendrites can be inhibited, thereby improving the safety performance and cycling performance of a lithium-ion battery.

### BRIEF DESCRIPTION OF DRAWINGS

To describe the technical solutions in the embodiments of this application or in the prior art more clearly, the following briefly describes the accompanying drawings required for describing the embodiments or the prior art. Apparently, the accompanying drawings in the following description show merely some of the embodiments of this application, and a person of ordinary skill in the art may still derive other technical solutions from these accompanying drawings without creative efforts.
FIG. 1 is a schematic structural diagram of an anode plate according to an embodiment of this application;
FIG. 2 is a schematic structural diagram of a porous anode skeleton according to an embodiment of this application;
FIG. 3 is an EDX cross-sectional view of Ag (silver) element distribution inside a porous anode skeleton according to an embodiment of this application; and
FIG. 4 is a schematic diagram of lithium deposition sites corresponding to different Ag electroplating methods.

### DETAILED DESCRIPTION OF EMBODIMENTS

To make the objectives, technical solutions, and advantages of this application more comprehensible, the following describes this application in detail with reference to accompanying drawings and embodiments. Apparently, the described embodiments are merely some but not all of the embodiments of this application. All other technical solutions obtained by a person of ordinary skill in the art based on the embodiments of this application without creative efforts shall fall within the protection scope of this application.

For existing anode materials for lithium-ion batteries, for example, graphite, lithium ions intercalate into a graphite layer structure during charging. Similar to a skeleton structure, the graphite layer provides storage space for lithium. However, such a skeleton structure is not present in lithium-ion batteries with a pure lithium metal electrode. In this case, volume of an anode plate will change dramatically during charging and discharging. Generally, thickness of the anode plate changes by 8-200 µm, degrading the cycling performance of the batteries. Furthermore, during charging, lithium deposits on a surface of a current collector of the anode plate. Due to uneven current density and uneven concentration of lithium ions in electrolyte, deposition speeds will be excessively high at certain sites during the deposition process. This portion of lithium grows out of the lithium metal in a synapse-like form, and continues growing and even branches, eventually forming sharp lithium dendrites. The presence of lithium dendrites will significantly reduce the density of deposition, thereby reducing energy density of the battery. For example, in some lithium-ion batteries, the actual deposition density of lithium metal is approximately 0.2 g/cm³, which is far less than 0.534 g/cm³, the true density of lithium metal. Due to the sparse deposition of lithium metal, the energy density of the battery will be reduced by more than 100 Wh/L. Furthermore, the lithium dendrites may pierce the separator to cause short circuit, resulting in battery failure and affecting battery safety.

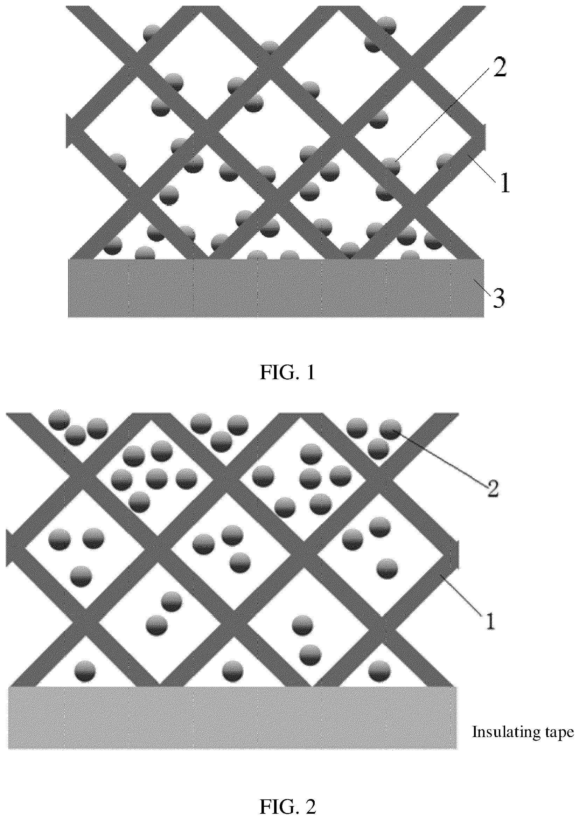

In view of this, this application provides an anode plate. As shown in FIG. 1, the anode plate includes a porous anode skeleton 1, a lithiophilic substance 2 whose concentration presents gradient distribution inside the porous anode skeleton 1, and a current collector 3.

The porous anode skeleton 1 may be a membrane structure, and pores in the porous anode skeleton 1 may be micropores or pores in other shapes. In addition, the porous anode skeleton 1 has adequate strength. For example, the strength of the porous anode skeleton 1 is not less than 15 MPa, so as to maintain a stable morphology and internal space. During charging, the porous anode skeleton 1 can provide a stable space for lithium metal to deposit in a large quantity of pores of the porous anode skeleton 1. During discharging, while lithium at the anode is constantly decreasing, the porous anode skeleton 1 can still provide a stable structure and internal space, so that the anode will not shrink violently. Furthermore, the porous anode skeleton 1 has good ionic and electronic conductivity for providing electricity conducting channels. In addition, the porous anode skeleton 1 has a high specific surface area. Therefore, the porous anode skeleton 1 can effectively disperse current during charging and discharging to reduce the current density, and create a more uniform electric field, thereby improving the evenness of lithium deposition and inhibiting the growth of lithium dendrites.

In this application, because the concentration of the lithiophilic substance can be in gradient distribution inside the porous anode skeleton 1, lithium metal can be induced to accumulate gradually from the current collector side to the separator side during the lithium deposition process. Therefore, the lithium metal is prevented from preferentially depositing on the surface of the anode skeleton but deposits inside the anode skeleton instead.

Specifically, as shown in FIG. 2, during preparation of the porous anode skeleton 1, one side of carbon paper is sealed by an insulating tape, and the other side is not sealed, so the lithiophilic substance in the electrolyte preferentially deposits at a side away from the insulating tape. Therefore, the lithiophilic substance cannot be replenished in a timely manner to the electrolyte on the side close to the insulating tape. As a result, a concentration gradient is formed inside the skeleton, implementing gradient distribution of lithiophilic substance concentration in the skeleton. The gradient distribution of lithiophilic substance concentration inside the porous anode skeleton allows directional deposition of lithium metal. To be specific, more nucleation sites are provided on a side with higher Ag concentration to adsorb more lithium ions, while on the side with lower Ag concentration, lithium ions can also be absorbed, but due to less nucleation sites provided, only enough space is reserved for entry of excess lithium metal from the side with higher Ag concentration. Macroscopically, this is manifested by lithium metal expanding from the side with higher Ag concentration to the side with lower Ag concentration, thereby implementing directional deposition of lithium metal.

In this application, as the concentration of the lithiophilic substance presents gradient distribution inside the porous anode skeleton, the lithium deposition direction can be controlled for even, controllable lithium deposition, which relieves lithium metal batteries from volume swelling during cycling. Furthermore, with lithium metal depositing inside the anode skeleton, the growth of lithium dendrites can be inhibited, thereby improving the safety performance and cycling performance of the battery.

To further illustrate the performance improvement brought by the lithiophilic substance in this application, the following description uses the lithiophilic substance Ag (silver) as an example.

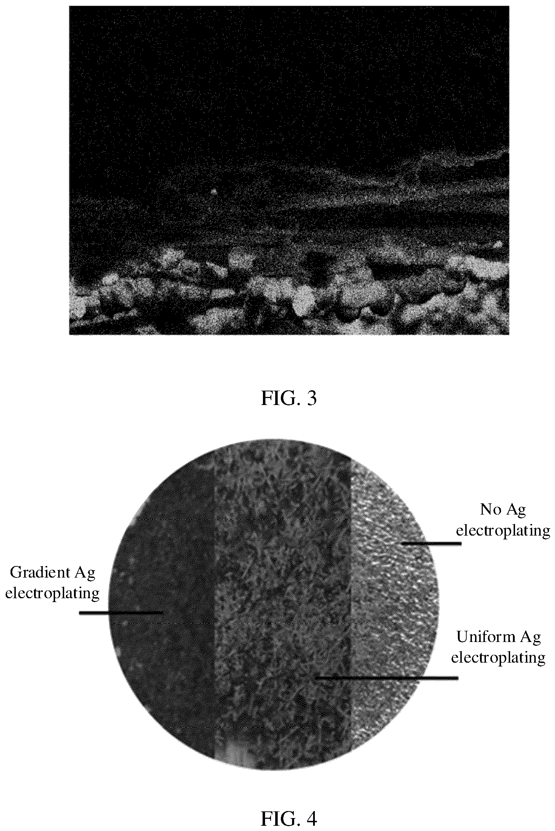

Referring to FIG. 3, FIG. 3 is an EDX (Energy Dispersive X-Ray Spectroscopy, energy dispersive X-ray spectroscopy) cross-sectional view of Ag element distribution inside a porous anode skeleton. It can be seen from FIG. 3 that Ag presents gradient distribution inside the porous anode skeleton. Specifically, the lower part is the side away from the insulating tape, where the Ag concentration is higher, whereas the upper part is the side close to the insulating tape, where the concentration is lower.

An alloying reaction takes place spontaneously between Ag and lithium metal, which can provide sites required for lithium nucleation. As such, the lithium deposition sites can be effectively controlled so that lithium preferentially deposits in the pores of the porous anode skeleton 1 during cycling rather than on the surface of the electrode plate. This is because the skeleton can function properly only when the lithium deposition sites are effectively controlled. If lithium deposits on the surface of the electrode plate, the volume of the electrode plate will still change dramatically during cycling and the current density will not decrease. Thus, the Ag plating can not only modify the porous anode skeleton into a lithiophilic conductive skeleton, but also reduce overpotential of metallic lithium deposits, improving the cycling stability and inhibiting the growth of dendrites.

FIG. 4 is a schematic diagram of lithium deposition sites corresponding to different Ag electroplating methods. As shown in FIG. 4, for a porous anode skeleton not electroplated with Ag, lithium metal deposits completely on the surface, and the surface shows the bright white luster of lithium metal. When a common Ag electroplating method, namely uniform Ag electroplating method, is used, gradient distribution is not formed in terms of Ag concentration in the anode skeleton, in which case some improvement is made but bright white lithium metal deposits are still visible on the surface of the electrode plate. When gradient Ag electroplating method is used, almost no traces of lithium metal deposition is found on the surface of the electrode plate, which means that lithium metal has gone to the inside of the porous anode skeleton.

In an embodiment of this application, as shown in FIG. 1, concentration of the lithiophilic substance 2 gradually decreases in a direction from the current collector 3 to a surface of the porous anode skeleton 1, and therefore gradient distribution is formed.

In an embodiment of this application, the foregoing porous anode skeleton 1 may be obtained by using this method: carbon fiber is impregnated with resin and then carbonized at a high temperature and carbon paper is obtained as resin decomposes to produce gas during the carbonizing process to generate a porous structure, where the carbon paper is used as the porous anode skeleton.

In this application, the material of the current collector 3 is not particularly limited, which may be a material well known to those skilled in the art, for example, at least one of copper, nickel, titanium, molybdenum, iron, zinc and their alloys, or a conductive inorganic material, for example, carbon or graphene. These materials may be used alone or combined for use.

In an embodiment of this application, the lithiophilic substance may include at least one of a metal, an oxide or a substance containing a specified functional group. The metal used as the lithiophilic substance may include but is not limited to at least one of silver, aluminum, gold, barium, calcium, indium, platinum, silicon, tin or zinc; the oxide used as the lithiophilic substance may include but is not limited to at least one of titanium dioxide, silicon dioxide, or zinc oxide; and the functional group may include but is not limited to at least one of hydroxyl (-OH), ester (-COOR), carboxyl (-COOH), or amino (-NH2). In addition, different deposition methods can be used to deposit the lithiophilic substance into the porous anode skeleton, such as electroplating, PVD (Physical Vapour Deposition, physical vapor deposition) method, or ALD (Atomiclayer Deposition, atomic layer deposition) method.

In an embodiment of this application, a thickness of the lithiophilic substance is 1 nm to 10 µm, which is related to different deposition times and different substances of deposition.

In an embodiment of this application, a material of the porous anode skeleton 1 may include at least one of a metal, a carbon material, or an insulating polymer. In this application, the material of the porous anode skeleton 1 is not particularly limited, which may be a material well known to those skilled in the art, for example, zinc, tin, silicon, carbon paper, PP (polypropylene), PA (nylon), POM (polyoxymethylene), PMMA (polymethyl methacrylate), or the like.

In an embodiment of this application, a porosity of the porous anode skeleton 1 is 20% to 90%.

In an embodiment of this application, a thickness of the anode plate is 10 to 100 µm.

In an embodiment of this application, the foregoing anode plate may further include lithium metal, where an amount of the lithium metal is 0.25 to 25 mg/cm². The cycling performance of the lithium-ion battery can be further improved by pre-deposition of lithium. However, a small amount of lithium metal is unable to improve cycling performance of the battery, while a large amount of lithium metal may cause overflow of lithium from the anode plate, resulting in lower safety. In addition, how lithium metal is added to the anode plate is not particularly limited in this application, and may include a fusion method, a PVD method, an electrochemical method, or the like.

In the anode plate provided in this application, concentration of the lithiophilic substance presents gradient distribution inside the porous anode skeleton, so lithium metal deposition is induced to accumulate gradually from the current collector side to the separator side. Therefore, lithium metal is prevented from preferentially depositing on the surface of the anode skeleton but deposits inside the anode skeleton instead. In this way, lithium deposition sites are controlled for even, controllable deposition of lithium metal, which relieves the anode plate from volume swelling during cycling. Furthermore, with lithium metal depositing inside the anode skeleton, the growth of lithium dendrites can be inhibited, thereby improving the safety performance and cycling performance of a lithium-ion battery.

This application further provides a preparation method of anode plate, including the following steps:
Sealing of porous anode skeleton:
One surface of a porous anode skeleton is sealed with insulation.

In this application, an insulating tape may be used to stick one side of the porous anode skeleton, so as to seal that side of the porous anode skeleton. Certainly, other insulation sealing materials than insulating tape may be used instead.

In an embodiment of this application, in addition to carbon paper, metal, other carbon materials, or insulating polymers such as zinc, tin, silicon, PP, PA, POM, or PMMA may also be used as the material of the porous anode skeleton.

### Deposition of lithiophilic substance:

The lithiophilic substance is deposited on an unsealed surface of the porous anode skeleton to obtain a porous anode skeleton containing the lithiophilic substance.

As one side of the porous anode skeleton is sealed and the other side is not, the lithiophilic substance in the electrolyte preferentially deposits at a side away from the insulating tape. Therefore, a deposit amount of the lithiophilic substance is small in the electrolyte on the side close to the insulating tape. As a result, a concentration gradient is formed inside the skeleton, implementing gradient distribution of lithiophilic substance concentration in the skeleton.

### Preparation of anode plate:

The porous anode skeleton containing the lithiophilic substance is cleaned and dried in a vacuum oven. Then the anode skeleton is placed on a current collector, with the unsealed side in contact with the current collector, and hot pressing is applied to bond the anode skeleton and the current collector to obtain an anode plate.

In the preparation method of anode plate provided in this application, the lithiophilic substance deposits on one surface of the porous anode skeleton so that the concentration of the lithiophilic substance presents gradient distribution inside the porous anode skeleton. Therefore, lithium metal deposition is induced to accumulate gradually from the current collector side to the separator side. Therefore, the lithium metal is prevented from preferentially depositing on a surface of the anode skeleton but deposits inside the anode skeleton. In this way, lithium deposition sites are controlled for even, controllable deposition of the lithium metal, which relieves the anode plate from volume swelling during cycling.

An embodiment of this application further provides a lithium-ion battery, including an anode plate, a separator, and an electrolyte. The separator is located between the cathode plate and the anode plate, where the anode plate is the anode plate described in this application.

In the lithium-ion battery provided in this application, concentration of the lithiophilic substance presents gradient distribution inside the porous anode skeleton, so lithium metal deposition is induced to accumulate gradually from the current collector side to the separator side. Therefore, lithium metal is prevented from preferentially depositing on the surface of the anode skeleton but deposits inside the anode skeleton instead. In this way, lithium deposition sites are controlled for even, controllable deposition of the lithium metal, which relieves the anode plate from volume swelling during cycling. Furthermore, with lithium metal depositing inside the anode skeleton, the growth of lithium dendrites can be inhibited, thereby improving the safety performance and cycling performance of the lithium-ion battery.

An embodiment of this application further provides an electronic apparatus, including the lithium-ion battery described in the foregoing embodiment. The lithium-ion battery used in the electronic apparatus features more even deposition of lithium metal, which relieves the anode plate from volume swelling during cycling, inhibiting the growth of lithium dendrites and making the electronic apparatus safer.

The cathode plate in this application is not particularly limited. Any cathode plate known in the art can be used, for example, a cathode plate containing lithium cobalt oxide, a cathode plate containing lithium manganate oxide, a cathode plate containing lithium iron phosphate, or a cathode plate containing lithium nickel cobalt manganate or lithium nickel cobalt aluminate.

The separator in this application is not particularly limited. Any separator known in the art can be used, for example, a PE (polyethylene) separator or a PP (polypropylene) separator.

In this application, the electrolyte is not particularly limited, and any electrolyte known in the art can be used, for example, an electrolyte prepared from organic solvents DOL (dioxolane) and DME (dimethyl ether), LiFSI (lithium bis(fluorosulfonyl) imide), and LiNO₃ (lithium nitrate), or an electrolyte prepared from organic solvents DMC (dimethyl carbonate), EMC (ethyl methyl carbonate), and LiPF₆.

The following describes the embodiments of this application more specifically by using examples and comparative examples. Various tests and evaluations were performed in the following methods. In addition, unless otherwise specified, "parts" and "%" are based on weight.

### Example 1

### <Preparation of porous anode skeleton containing lithiophilic substance>

### a) Sealing of carbon paper with insulation

Carbon paper was cleaned with 1.0wt% hydrochloric acid and deionized water separately, and then one side of the carbon paper was sealed with insulation by using an insulating tape, where the carbon paper was 0.1 mm thick.

### b) Deposition of lithiophilic substance

A 0.2 mol/L silver nitrate solution was used to electroplate the sealed carbon paper, with an electroplating current controlled at 100 mA/cm² for a duration of 180 seconds. With an electroplating cycle of 18 seconds, the electroplating was performed for 10 times at intervals of 18 seconds to obtain silver-plated carbon paper.

### c) Drying

The silver-plated carbon paper was cleaned and dried in a vacuum oven at 60 degrees Celsius to obtain a porous anode skeleton containing a lithiophilic substance.

### <Preparation of anode plate>

In a dry argon atmosphere, the porous anode skeleton containing the lithiophilic substance was placed on a current collector, the side not sealed by the insulating tape being in contact with the current collector, the insulating tape was removed, and hot pressing was applied to bond the anode skeleton and the current collector, with a hot pressing temperature controlled at 300 degrees Celsius and hot pressing pressure controlled at 100 kg to obtain an anode plate. The anode plate was cut into pieces of 40 x 60 mm for subsequent use.

### <Preparation of cathode plate>

Cathode active materials LiFePO₄ (lithium iron phosphate), conductive carbon black, and PVDF (polyvinylidene fluoride) were mixed at a weight ratio of 97.5:1.0:1.5, and then NMP (N-methylpyrrolidone) was added as a solvent to prepare a slurry with a solid content of 75% which was stirred thoroughly. The slurry was uniformly applied on an aluminum foil current collector with a thickness of 15 µm, and dried at 90 degrees Celsius to obtain a cathode plate. The loading amount of the cathode active material on the aluminum foil current collector was 1 mg/cm². After the coating was finished, the cathode plate was cut into pieces of 38 mm x 58 mm for subsequent use.

### <Preparation of electrolyte>

In a dry argon atmosphere, organic solvents DOL and DME were mixed at a volume ratio of DOL:DME = 1:1 to obtain a mixed solvent. Then, LiFSI and LiNO₃ were added to the mixed solvent, dissolved and fully mixed to obtain an electrolyte. The amount of LiFSI added to the mixed solvent was 1 mol/L, and the amount of LiNO₃ added to the mixed solvent was 1 wt%.

### <Preparation of lithium-ion cell>

A PE film (polyethylene) with a thickness of 15 µm was selected as the separator. One cathode plate was placed on both sides of the anode plate, one layer of separator was placed between the anode plate and the cathode plate to form a lamination, and then four corners of the entire lamination structure were fixed with adhesive tapes. Then, the lamination structure was put into an aluminum plastic film, followed by top-side sealing, electrolyte injection, and packaging to obtain a laminated lithium-ion cell.

### <Preparation of half cell for test use>

A button cell with model 2430 was selected as a half cell. Assembly was performed from top down in this order: anode cap, spring, gasket, anode lithium sheet, electrolyte, polyethylene (PE) separator with a thickness of 15 µm, electrolyte, cathode, Cu foil, cathode cap. The cathode of the half cell was the anode plate prepared in Example 1, whose diameter was18 mm after cutting, and the cathode current collector thereof was Cu foil. The electrolyte of the half cell was obtained by: mixing organic solvents EC (ethylene carbonate) and DEC (diethyl carbonate) at a mass ratio of EC:DEC = 1:1 in a dry argon atmosphere, adding and dissolving LiPF₆ (lithium hexafluorophosphate) in the mixed liquid, and mixing them thoroughly, where the concentration of lithium salt in the electrolyte was 1.0 mol/L.

### Example 2

Example 2 was the same as Example 1 except that the current density of electroplating was 40 mA/cm².

### Example 3

Example 3 was the same as Example 1 except that aluminum was selected as the lithiophilic substance.

### Example 4

Example 4 was the same as Example 1 except that gold was selected as the lithiophilic substance.

### Example 5

### <Titanium dioxide was selected as the lithiophilic substance and a PVD method was used.>

### <Preparation of porous anode skeleton containing lithiophilic substance>

Magnetron sputtering was used to deposit titanium dioxide in carbon paper. The sputtering mode was radio frequency sputtering, which was performed for 10 minutes with a power of 100 W and a bias of 0 to produce carbon paper with titanium dioxide deposited, where the concentration of titanium dioxide presented gradient distribution in the carbon paper.

### <Preparation of anode plate>

In a dry argon atmosphere, the porous anode skeleton containing the lithiophilic substance was placed on a current collector, the side not sealed by an insulating tape being in contact with the current collector, the insulating tape was removed, and hot pressing was applied to bond the anode skeleton and the current collector, with a hot pressing temperature of 300 degrees Celsius and hot pressing pressure controlled at 100 kg to obtain an anode plate. The anode plate was cut into pieces of 40 x 60 mm for subsequent use.

### <Preparation of cathode plate>

Cathode active materials LiFePO₄ (lithium iron phosphate), conductive carbon black, and PVDF (polyvinylidene fluoride) were mixed at a weight ratio of 97.5:1.0:1.5, and then NMP (N-methylpyrrolidone) was added as a solvent to prepare a slurry with a solid content of 75% which was stirred thoroughly. The slurry was uniformly applied on an aluminum foil current collector with a thickness of 15 µm, and dried at 90 degrees Celsius to obtain a cathode plate. The loading amount of the cathode active material on the aluminum foil current collector was 1 mg/cm². After the coating was finished, the cathode plate was cut into pieces of 38 mm x 58 mm for subsequent use.

### <Preparation of electrolyte>

In a dry argon atmosphere, organic solvents DOL and DME were mixed at a volume ratio of DOL:DME = 1:1 to obtain a mixed solvent. Then, LiFSI and LiNO₃ were added to the mixed solvent, dissolved and fully mixed to obtain an electrolyte. The amount of LiFSI added to the mixed solvent was 1 mol/L, and the amount of LiNO₃ added to the mixed solvent was 1 wt%.

### <Preparation of lithium-ion cell>

A PE film (polyethylene) with a thickness of 15 µm was selected as the separator. One cathode plate was placed on both sides of the anode plate, one layer of separator was placed between the anode plate and the cathode plate to form a lamination, and then four corners of the entire lamination structure were fixed with adhesive tapes. Then, the lamination structure was put into an aluminum plastic film, followed by top-side sealing, electrolyte injection, and packaging to obtain a laminated lithium-ion cell.

### <Preparation of half cell for test use>

A button cell with model 2430 was selected as the half cell. Assembly was performed from top down in this order: anode cap, spring, gasket, anode lithium sheet, electrolyte, polyethylene (PE) separator with a thickness of 15 µm, electrolyte, cathode, Cu foil, cathode cap. The cathode of the half cell was the anode plate prepared in Example 1, whose diameter was 18 mm after cutting, and the cathode current collector was Cu foil. The electrolyte of the half cell was obtained by: mixing organic solvents EC (ethylene carbonate) and DEC (diethyl carbonate) at a mass ratio of EC:DEC = 1:1 in a dry argon atmosphere, adding and dissolving LiPF₆ (lithium hexafluorophosphate) in the mixed liquid, and mixing them thoroughly, where the concentration of lithium salt in the electrolyte was 1.0 mol/L.

### Comparative Example 1

### <Preparation of porous anode skeleton containing lithiophilic substance whose concentration is not in gradient distribution>

### a) Treatment of carbon paper

Carbon paper was cleaned with 1.0wt% hydrochloric acid and deionized water separately. The carbon paper was 0.1 mm thick.

### b) Deposition of lithiophilic substance

A 0.2 mol/L silver nitrate solution was used to electroplate the carbon paper, with an electroplating current controlled at 100 mA/cm² and electroplating duration of 180 seconds. With an electroplating cycle of 18 seconds, the electroplating was performed for 10 times at intervals of 18 seconds to obtain silver-plated carbon paper.

### c) Drying

The silver-plated carbon paper was cleaned and dried in a vacuum oven at 60 degrees Celsius to obtain a porous anode skeleton containing a lithiophilic substance.

### <Preparation of anode plate>

In a dry argon atmosphere, the porous anode skeleton containing the lithiophilic substance was placed on a current collector, and hot pressing was applied to bond the anode skeleton and the current collector, with a hot pressing temperature of 300 degrees Celsius and hot pressing pressure controlled at 100 kg to obtain an anode plate. The anode plate was cut into pieces of 40 x 60 mm for subsequent use.

### <Preparation of cathode plate>

Cathode active materials LiFePO₄ (lithium iron phosphate), conductive carbon black, and PVDF (polyvinylidene fluoride) were mixed at a weight ratio of 97.5:1.0:1.5, and then NMP (N-methylpyrrolidone) was added as a solvent to prepare a slurry with a solid content of 75% which was stirred thoroughly. The slurry was uniformly applied on an aluminum foil current collector with a thickness of 15 µm, and dried at 90 degrees Celsius to obtain a cathode plate. The loading amount of the cathode active material on the aluminum foil current collector was 1 mg/cm². After the coating was finished, the cathode plate was cut into pieces of 38 mm x 58 mm for subsequent use.

### <Preparation of electrolyte>

In a dry argon atmosphere, organic solvents DOL and DME were mixed at a volume ratio of DOL: ME = 1:1 to obtain a mixed solvent. Then, LiFSI and LiNO₃ were added to the mixed solvent, dissolved and fully mixed to obtain an electrolyte. The amount of LiFSI added to the mixed solvent was 1 mol/L, and the amount of LiNO₃ added to the mixed solvent was 1 wt%.

### <Preparation of lithium-ion cell>

A PE film (polyethylene) with a thickness of 15 µm was selected as the separator. One cathode plate was placed on both sides of the anode plate, one layer of separator was placed between the anode plate and the cathode plate to form a lamination, and then four corners of the entire lamination structure were fixed with adhesive tapes. Then, the lamination structure was put into an aluminum plastic film, followed by top-side sealing, electrolyte injection, and packaging to obtain a laminated lithium-ion cell.

### <Preparation of half cell for test use>

A button cell with model 2430 was selected as the half cell. Assembly was performed from top down in this order: anode cap, spring, gasket, anode lithium sheet, electrolyte, polyethylene (PE) separator with a thickness of 15 µm, electrolyte, cathode, Cu foil, cathode cap. The cathode of the half cell was the anode plate prepared in Comparative Example 1, whose diameter wais 18 mm after cutting, and the cathode current collector was Cu foil. The electrolyte of the half cell was obtained by: mixing organic solvents EC (ethylene carbonate) and DEC (diethyl carbonate) at a mass ratio of EC:DEC = 1:1 in a dry argon atmosphere, adding and dissolving LiPF6 (lithium hexafluorophosphate) in the mixed liquid, and mixing them thoroughly, where the concentration of lithium salt in the electrolyte was 1.0 mol/L.

### Comparative Example 2

### <Preparation of anode plate containing only carbon paper>

Comparative Example 2 was the same as Comparative Example 1 except that carbon paper with a thickness of 0.1 mm was cut to obtain an anode plate which was used as the cathode plate of a half cell for test use.

### Comparative Example 3

### <Preparation of anode plate containing only copper current collector>

Comparative Example 3 was the same as Comparative Example 1 except that copper foil with a thickness of 0.01 mm was cut to obtain an anode plate which was used as the cathode plate of a half cell for test use.

### Comparative Example 4

### <Preparation of anode plate containing pre-deposited lithium metal>

Comparative Example 4 was the same as Comparative Example 1 except that the anode plate was copper foil containing pre-deposited lithium metal, where a thickness of the copper foil was 0.01 mm and a thickness of pre-deposited lithium was 30 µm.

### Comparative Example 5

Comparative Example 5 was the same as Comparative Example 1 except that the current density of electroplating was 40 mA/cm².

### Comparative Example 6

Comparative Example 5 was the same as Comparative Example 1 except that the current density of electroplating was 20 mA/cm².

### Comparative Example 7

Comparative Example 7 was the same as Example 1 except that the current density of electroplating was 20 mA/cm².

### Comparative Example 8

A current density of 1000 mA/cm² was applied and the plating was scorched, so that an anode plate was unable to be prepared.

### <Flexural strength test>

The three-point bending performance of the material was tested by an INSTRON-5569 electronic universal material testing machine. The size of the sample under the bending test was 60 mm x 10 mm x 2 mm, with a span of 40 mm. A BJ120-3AA resistance strain gauge was stuck in the middle of the span using 502 glue. During the test, the moving speed of the beam was 2 mm/min, the data acquisition rate was 100 points/min, and the diameter of the indenter was 10 mm. The flexural strength was obtained based on data collected by a connected recorder.

### <Thickness test of lithium layer and skeleton layer>

The thicknesses of the deposited lithium layer and skeleton layer were measured by using a field emission scanning electron microscope (SEM).

### <Performance test of half cell>

The following method was used to test the half cells obtained in Examples 1 to 5 and Comparative Examples 1 to 4.

The efficacy of the examples and comparative examples was expressed by the number of cycles when the half cell was short-circuited and swelling of the electrode plates. The half-cell cycles were measured by a commercial LAND battery test system or a commercial Neware battery tester, and the volume swelling was measured by a micrometer. Specific data is given in the table below.

The half cell was first discharged for 15 hours at a current density of 0.2 mA/cm², and then charged to 1 V at a current density of 0.2 mA/cm². After this process was performed twice, the cell was activated. Then, the cell was discharged at a current density of 1 mA/cm² for 3 hours, and then charged at a current density of 1 mA/cm² to 1 V. Such cycles continued until the cell was short-circuited.

Test parameters and corresponding test results of Examples 1 to 5 and Comparative Examples 1 to 4 were given in Table 1.

**Table 1 Test parameters and corresponding test results of the examples and comparative examples**

| | Cycles (80% capacity retention) | Volume swelling (state of charge from 100% to 0%) |
|---|---|---|
| Example 1 | 500 | 0% |
| Example 2 | 400 | 10% |
| Example 3 | 400 | 10% |
| Example 4 | 450 | 5% |
| Example 5 | 400 | 10% |
| Comparative Example 1 | 300 | 20% |
| Comparative Example 2 | 70 | 50% |
| Comparative Example 3 | 50 | 500% |
| Comparative Example 4 | 50 | 125% |
| Comparative Example 5 | 200 | 30% |
| Comparative Example 6 | 120 | 50% |
| Comparative Example 7 | 120 | 50% |
| Comparative Example 8 | Not applicable | Not applicable |

As shown in Table 1, although different current densities were applied for electroplating of Examples 1 and 2, compared with Comparative Examples 1 to 7, their numbers of cycles were significantly increased, and volume swelling was significantly reduced. Especially in the case of Example 1, volume swelling measured was 0 and the number of cycles was significantly increased.

Although the lithiophilic substances used in Examples 3 and 4 were different from that used in Example 1, in Examples 3 and 4, the numbers of cycles were significantly increased and volume swelling was significantly reduced in comparison with Comparative Examples 1 to 7. This shows that when the lithiophilic substance presents gradient distribution inside the porous anode skeleton, the cycling performance of the battery can be improved and the volume swelling arising from battery cycling can be reduced.

Compared with Comparative Examples 1 to 7, in Example 5, the number of cycles was significantly increased and volume swelling was significantly reduced. This shows that the anode plate obtained by using the PVD method on an oxide can also improve the cycling performance of the battery and reduce the volume swelling arising from battery cycling.

In Comparative Example 1, a common silver electroplating method was used, so gradient distribution of lithiophilic substance was not formed. As a result, battery performance was not improved.

In Comparative Example 2, the anode plate did not contain a current collector or lithium metal, so the anode plate had low performance. As a result, battery performance was not improved.

In Comparative Example 3, the anode plate did not contain carbon paper or lithium metal, so the anode plate did not provide a porous structure for deposition of lithiophilic substance. As a result, battery performance was not improved.

In Comparative Example 4, the anode plate did not contain carbon paper, so the anode plate did not provide a porous structure for lithiophilic substance deposition. As a result, battery performance was not improved.

In Comparative Example 5, the current density of electroplating was the same as that in Example 1 but the common silver electroplating method was used, so gradient distribution of lithiophilic substance was not formed. As a result, the number of cycles was not increased and volume swelling performance was not improved.

In Comparative Example 6, a common silver electroplating method was used and the current density of electroplating was low, so gradient distribution of lithiophilic substance was not formed. As a result, the number of cycles was not increased and volume swelling performance was not improved.

In Comparative Example 7, a gradient silver electroplating method was used, but the current density of electroplating was further reduced. When a low current density is used for electroplating, particles of the lithiophilic substance are so large that the lithiophilic substance tends to deposit on the surface of the porous anode skeleton rather than goes inside the skeleton. Therefore, gradient distribution of lithiophilic substance was not formed. As a result, the number of cycles was reduced and volume swelling was increased.

In Comparative Example 8, because a high current density was used, the plating was scorched so that it was impossible to prepare an anode plate. This shows that current density needs to be controlled during electroplating to avoid scorch of the plating.

The foregoing descriptions are merely preferable embodiments of this application, but are not intended to limit this application. Any modification, equivalent replacement, or improvement made without departing from the spirit and principle of this application shall fall within the protection scope of this application.

## Claims

1. An anode plate, comprising a porous anode skeleton, a lithiophilic substance whose concentration presents gradient distribution inside the porous anode skeleton, and a current collector.

2. The anode plate according to claim 1, wherein the concentration of the lithiophilic substance gradually decreases in a direction from the current collector to a surface of the porous anode skeleton.

3. The anode plate according to claim 1 or 2, wherein the lithiophilic substance comprises at least one of a metal, an oxide, or a substance containing a specified functional group.

4. The anode plate according to claim 3, wherein the metal comprises at least one of silver, aluminum, gold, barium, calcium, indium, platinum, silicon, tin, or zinc, the oxide comprises at least one of titanium dioxide, silicon dioxide, or zinc oxide, and the functional group comprises at least one of hydroxyl, ester, carboxyl, or amino.

5. The anode plate according to claim 1, wherein a thickness of the lithiophilic substance is 1 nm to 10 µm.

6. The anode plate according to claim 1, a material of the porous anode skeleton comprises at least one of a metal, a carbon material, or an insulating polymer.

7. The anode plate according to claim 1, the porous anode skeleton has a strength of not less than 200 GPa and a porosity of 20% to 90%.

8. The anode plate according to claim 1, wherein a thickness of the anode plate is 10 µm to 100 µm.

9. The anode plate according to claim 1, further comprising lithium metal.

10. The anode plate according to claim 9, wherein an amount of the lithium metal is 0.25-25 mg/cm².

11. The anode plate according to claim 10, a material of the current collector comprises at least one of copper, nickel, titanium, molybdenum, iron, zinc, carbon, or graphene.

12. A lithium-ion battery, comprising a cathode plate;
an anode plate;
a separator, wherein the separator is located between the cathode plate and the anode plate; and
an electrolyte;
wherein the anode plate is the anode plate according to any one of claims 1 to 11.

13. An electronic apparatus, comprising the lithium-ion battery according to claim 12.
